# EUROPÄISCHE PATENTSCHRIFT

(11) **EP 2 667 819 B1**
(45) Veröffentlichungstag und Bekanntmachung des Hinweises auf die Patenterteilung: **22.07.2015**
(21) Anmeldenummer: 12700834.0
(22) Anmeldetag: 20.01.2012
(51) Int. Cl.: A61C 1/05, A61C 3/02, B23B 51/06, B22F 3/20, B22F 5/10, B22F 7/06, B23P 15/32

(54) **DENTALBOHRER UND VERFAHREN ZU SEINER HERSTELLUNG**
DENTAL DRILL AND METHOD FOR PRODUCING SAME
FRAISE DENTAIRE ET PROCÉDÉ DE FABRICATION CORRESPONDANT

(30) Priorität: 27.01.2011 DE 102011000352
(43) Veröffentlichungstag der Anmeldung: 04.12.2013
(73) Patentinhaber: Friedrichs, Arno, 95326 Kulmbach (DE)
(72) Erfinder: Friedrichs, Arno, 95326 Kulmbach (DE)
(74) Vertreter: Zimmermann & Partner Patentanwälte mbB
(86) Internationale Anmeldenummer: PCT/EP2012/050852
(87) Internationale Veröffentlichungsnummer: WO 2012/101050

(56) Entgegenhaltungen:
- EP-A1- 0 118 035
- WO-A2-2010/005193
- DE-A1- 3 208 282
- DE-A1- 3 636 798
- DE-U- 7 435 411
- SU-A1- 722 699
- SU-A1- 1 046 039
- US-A- 3 073 189
- US-A- 5 575 650
- US-A1- 2008 080 938

## Beschreibung

Die Erfindung betrifft einen Dentalbohrer und ein Verfahren zu seiner Herstellung.

Es sind bereits einteilig ausgebildete Dentalbohrer bekannt, die einen Schaft und einen daran anschließenden, eine oder mehrere Schneiden aufweisenden Arbeitsabschnitt enthalten und die im Inneren des Schaftes mit einem zentralen Kühlmittelkanal ausgestattet sind. Dieser Kühlmittelkanal dient im Arbeitsbetrieb des Dentalbohrers dazu, ein Kühlmittel, insbesondere eine Kühlflüssigkeit, in den Bereich des Arbeitsabschnittes zu transportieren und dort zur Kühlung des Arbeitsabschnittes und des momentan behandelten Zahnes eines Patienten zu verwenden.

Bei derartigen bekannten Dentalbohrern mündet der genannte Kühlmittelkanal im Übergangsbereich zwischen dem Schaft und dem Arbeitsabschnitt, so dass Kühlmittel bereits im Bereich des hinteren Endes des Arbeitsabschnittes austritt und somit lediglich den hinteren Teil des Arbeitsabschnittes direkt kühlt. Ein Nachteil derartiger Bohrer besteht darin, dass nur eine unzulängliche Kühlung des Schneidenbereiches des Dentalbohrers und auch eine unzulängliche Kühlung des momentan behandelten Zahnes des Patienten erfolgt.

Aus der US 5,575,650 A ist ein einteiliger Dentalbohrer bekannt, welcher einen Schaft und einen Arbeitsbereich aufweist, wobei durch den Schaft und den Arbeitsbereich ein mittiger Kühlkanal verläuft.

Aus der DE 36 36 798 A1 ist ein gesintertes einteiliges Schneidwerkzeug bekannt, welches ebenfalls einen Schaft und einen Arbeitsbereich aufweist. Im Schaft sind geradlinige Kühlkanäle vorgesehen, die jeweils im Arbeitsbereich in einen gewendelten Kühlkanal übergehen.

In der am 03.03.2011 veröffentlichten DE 10 2009 043 875.0 ist ein Dentalbohrer beschrieben, der einen Schaft und einen mit dem Schaft verbundenen Arbeitsabschnitt aufweist. Der Schaft enthält einen mittig angeordneten, durchgehenden ersten Kanal. Der Arbeitsabschnitt weist einen oder mehrere durchgehende, spiralförmig verlaufende weitere Kanäle auf. Zwischen dem Schaft und dem Arbeitsabschnitt ist ein Spalt vorgesehen, in den der erste Kanal und die weiteren Kanäle münden. Der Schaft und der Arbeitsabschnitt sind mittels einer Spannhülse, einer Lötverbindung oder einer Klebeverbindung miteinander verbunden.

Die Aufgabe der Erfindung besteht darin, ein Verfahren zur Herstellung eines Dentalbohrers und einen Dentalbohrer mit verbesserter Kühlung des Schneidenbereiches anzugeben, der im Übergangsbereich zwischen dem Schaft und dem Arbeitsabschnitt kein zusätzliches Verbindungsmaterial, insbesondere keine Spannhülse, kein Lötmaterial und auch kein Klebematerial benötigt.

Diese Aufgabe wird durch ein Verfahren mit den im Anspruch 1 angegebenen Merkmalen bzw. durch einen Dentalbohrer mit den im Anspruch 5 angegebenen Merkmalen gelöst. Vorteilhafte Ausgestaltungen und Weiterbildungen der Erfindung sind Gegenstand der abhängigen Patentansprüche.

Die Vorteile der Erfindung bestehen insbesondere darin, dass ein Dentalbohrer bereitgestellt wird, der im Übergangsbereich zwischen dem Schaft und dem Arbeitsabschnitt keinerlei sichtbare Naht- bzw. Fügestelle aufweist. Des Weiteren sind in diesem Übergangsbereich keinerlei Verbindungsmaterialien vorgesehen wie beispielsweise Lötmaterial, Klebematerial oder eine Spannhülse. Dies hat den Vorteil, dass die Bioverträglichkeit des Dentalbohrers verbessert ist. In diesem Zusammenhang ist von Bedeutung, dass ein Dentalbohrer während einer Zahnbehandlung Kontakt mit den Lippen, der Zunge und den Zähnen eines Patienten hat. Durch das Nichtvorhandensein von Verbindungsmaterialien wie einer Spannhülse, Lötmaterial oder Klebematerial wird sichergestellt, dass keine dem menschlichen Organismus schadende Materialien über die Schleimhäute des Patienten aufgenommen werden können und dadurch die Gesundheit des Patienten gefährden können. Des Weiteren wird in vorteilhafter Weise verhindert, dass Patienten, die Allergien gegen das Material der Spannhülse, der Lötverbindung oder der Klebeverbindung haben, mit diesen Materialien in Kontakt kommen können.

Ein weiterer Vorteil der Erfindung besteht darin, dass ein Auftreten von Dichtigkeitsproblemen im Übergangsbereich zwischen dem Schaft und dem Arbeitsabschnitt ausgeschlossen ist. Dies ist darauf zurückzuführen, dass sich durch das Versintern des Schaftes mit dem Arbeitsabschnitt die im Oberflächenbereich des Schaftes befindlichen Partikel mit den im Oberflächenbereich des Arbeitsabschnitts befindlichen Partikeln derart vermischen, dass eine fügenstellenfreie Verbindung des Schaftes mit dem Arbeitsabschnitt entsteht. Folglich gibt es keine sichtbaren Naht- bzw. Fügestellen, durch welche in unerwünschter Weise während des Betriebes des Dentalbohrers Kühlflüssigkeit austreten könnte.

Des Weiteren ist bei einem Dentalbohrer gemäß der Erfindung sichergestellt, dass die Kühlflüssigkeit ohne Druckverlust bis in den vom Schaft abgelegenen Endbereich der spiralförmig verlaufenden weiteren Kanäle geführt wird und dort austritt, so dass der Schneidenbereich des Dentalbohrers und auch der behandelte Zahn des Patienten in gewünschter Weise gekühlt werden.

Weitere vorteilhafte Eigenschaften der Erfindung ergeben sich aus deren beispielhafter Erläuterung anhand der Figuren. Es zeigt
- Figur 1: eine Längsschnittdarstellung eines Dentalbohrers gemäß einem ersten Ausführungsbeispiel für die Erfindung,
- Figur 2: eine Längsschnittdarstellung eines Dentalbohrers gemäß einem zweiten Ausführungsbeispiel für die Erfindung,
- Figur 3: Skizzen zur Erläuterung eines Verfahrens zur Herstellung eines Dentalbohrers gemäß der Erfindung und
- Figur 4: eine Längsschnittdarstellung eines Dentalbohrers gemäß einem dritten Ausführungsbeispiel für die Erfindung.

Dentalbohrer gemäß der Erfindung weisen einen Schaft und einen Arbeitsabschnitt auf, wobei der Schaft einen mittig angeordneten, durchgehenden ersten Kanal aufweist, der Arbeitsabschnitt einen oder mehrere durchgehende, spiralförmig verlaufende weitere Kanäle aufweist, der erste Kanal und die weiteren Kanäle in eine gemeinsame, den Schaft und den Arbeitsabschnitt verbindende Kammer münden und der Schaft und der Arbeitsabschnitt miteinander versintert sind. Eine derartige Gestaltung eines Dentalbohrers schafft die Möglichkeit, während des Arbeitsbetriebes des Dentalbohrers eine ausreichende Menge an Kühlmittel, insbesondere Kühlflüssigkeit, direkt in den Schneidenbereich des Arbeitsabschnittes des Dentalbohrers zu transportieren, so dass eine im Vergleich zu bekannten Dentalbohrern verbesserte Kühlung des Schneidenbereiches und des momentan behandelten Zahnes des Patienten erreicht wird.

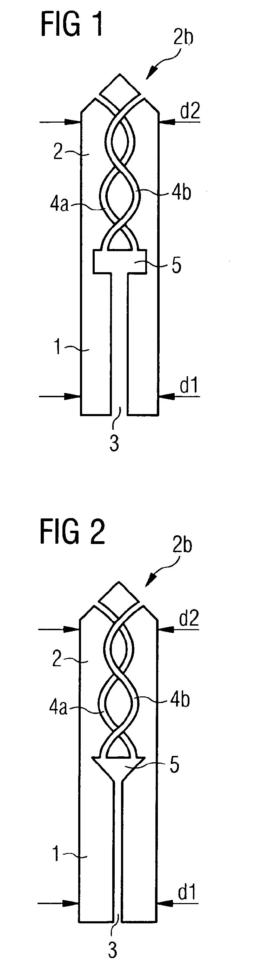

Die Figur 1 zeigt eine Skizze einer Längsschnittdarstellung eines Dentalbohrers gemäß einem ersten Ausführungsbeispiel für die Erfindung. Dieser Dentalbohrer weist einen zylindrisch ausgebildeten Schaft 1 und einen ebenfalls zylindrisch ausgebildeten Arbeitsabschnitt 2 auf. Im Schaft 1 ist mittig ein in Axialrichtung verlaufender, durchgehender erster Kanal 3 vorgesehen. Der Durchmesser des Schaftes 1 ist mit d1 bezeichnet.

Im Arbeitsabschnitt 2 des Dentalbohrers sind zwei durchgehende, spiralförmig verlaufende weitere Kanäle 4a und 4b vorgesehen, die im Schneidenbereich 2b des Arbeitsabschnittes 2 münden. Der Durchmesser des Arbeitsabschnittes 2 ist mit d2 bezeichnet und stimmt mit dem Durchmesser d1 des Schaftes 1 überein.

Im Übergangsbereich vom Schaft 1 zum Arbeitsabschnitt 2 ist im Inneren des Dentalbohrers eine Kammer 5 vorgesehen. Diese Kammer 5 ist bei dem in der Figur 1 gezeigten Ausführungsbeispiel scheibenförmig ausgebildet. Sowohl der erste Kanal 3 als auch die beiden spiralförmigen weiteren Kanäle 4a und 4b münden in die Kammer 5, die alternativ auch schlitzförmig, zylindrisch, eckig oder kegelförmig ausgebildet sein kann.

Im Arbeitsbetrieb des Dentalbohrers, beispielsweise beim Präparieren eines Kiefers zur späteren Aufnahme eines Implantats oder beim Entfernen von Karies aus einem Zahn eines Patienten, wird unter leichtem Druck ein Kühlmittel, insbesondere eine Kühlflüssigkeit, in der Figur 1 von unten in den ersten Kanal 3 eingegeben. Das Kühlmittel durchläuft den geradlinig ausgebildeten ersten Kanal 3, füllt die im Übergangsbereich vom Schaft 1 zum Arbeitsabschnitt 2 vorgesehene Kammer 5, dringt von der Kammer 5 aus in die spiralförmig verlaufenden weiteren Kanäle 4a und 4b ein, durchläuft diese und wird dann im Schneidenbereich 2b des Arbeitsabschnitts 2 ausgegeben. Folglich wird sowohl der Schneidenbereich, der den Arbeitsbereich des Dentalbohrers bildet, als auch der momentan behandelte Zahn des Patienten von dem aus den Kanälen 4a und 4b austretenden Kühlmittel direkt gekühlt.

Der Schaft 1 und der Arbeitsabschnitt 2 des Dentalbohrers können aus demselben Material oder aus verschiedenen Materialien bestehen. Vorzugsweise besteht der Schaft 1 aus Stahl, Keramik, Hartmetall oder Kunststoff und der Arbeitsabschnitt 2 aus Stahl, Keramik oder Hartmetall. Der Schneidenbereich 2b des Arbeitsabschnitts 2 kann aus demselben Material bestehen wie der restliche Teil des Arbeitsabschnitts 2 oder auch aus einem anderen Material.

Die Figur 2 zeigt eine Skizze einer Längsschnittdarstellung eines Dentalbohrers gemäß einem zweiten Ausführungsbeispiel für die Erfindung. Dieser Dentalbohrer weist einen zylindrisch ausgebildeten Schaft 1 und einen ebenfalls zylindrisch ausgebildeten Arbeitsabschnitt 2 auf. Im Schaft 1 ist mittig in Axialrichtung verlaufend ein durchgehender erster Kanal 3 vorgesehen. Der Durchmesser des Schaftes 1 ist mit d1 bezeichnet.

Im Arbeitsabschnitt 2 des Dentalbohrers sind zwei durchgehende, spiralförmig verlaufende weitere Kanäle 4a und 4b vorgesehen, die im Schneidenbereich 2b des Arbeitsabschnittes 2 münden. Der Durchmesser des Arbeitsbereiches 2 ist mit d2 bezeichnet und stimmt mit dem Durchmesser d1 des Schaftes 1 überein.

Im Übergangsbereich vom Schaft 1 zum Arbeitsabschnitt 2 ist im Inneren des Dentalbohrers eine Kammer 5 vorgesehen. Diese Kammer 5 ist bei dem in der Figur 2 gezeigten Ausführungsbeispiel kegelförmig ausgebildet, kann aber auch eine andere Form haben. Sowohl der erste Kanal 3 als auch die beiden spiralförmigen weiteren Kanäle 4a und 4b münden in die Kammer 5. Die Kammer 5 ist beim gezeigten Ausführungsbeispiel im Schaft 1 vorgesehen. Alternativ dazu kann sie auch im Arbeitsabschnitt 2 vorgesehen sein. Eine weitere Alternative besteht darin, einen Teil der Kammer im Schaft 1 den anderen Teil der Kammer im Arbeitsabschnitt 2 vorzusehen.

Im Arbeitsbetrieb des Dentalbohrers, beispielsweise beim Entfernen von Karies aus einem Zahn eines Patienten, wird unter Druck ein Kühlmittel, insbesondere eine Kühlflüssigkeit, in der Figur 2 von unten in den ersten Kanal 3 eingegeben. Das Kühlmittel durchläuft den geradlinig ausgebildeten ersten Kanal 3, füllt die zwischen dem Schaft 1 und dem Arbeitsabschnitt 2 vorgesehene Kammer 5, dringt von der Kammer 5 aus in die spiralförmig verlaufenden weiteren Kanäle 4a und 4b ein, durchläuft diese und wird dann im Schneidenbereich 2b des Arbeitsabschnitts 2 ausgegeben. Folglich wird sowohl der Schneidenbereich, der den Arbeitsbereich des Dentalbohrers bildet, als auch der momentan behandelte Zahn des Patienten von dem aus den Kanälen 4a und 4b austretenden Kühlmittel direkt gekühlt.

Der Schaft 1 und der Arbeitsabschnitt 2 des Dentalbohrers können aus demselben Material oder aus verschiedenen Materialien bestehen. Vorzugsweise besteht der Schaft 1 aus Stahl, Keramik, Hartmetall oder Kunststoff und der Arbeitsabschnitt 2 aus Stahl, Keramik oder Hartmetall. Der Schneidenbereich 2b des Arbeitsabschnitts 2 kann aus demselben Material bestehen wie der restliche Teil des Arbeitsabschnitts 2 oder auch aus einem anderen Material.

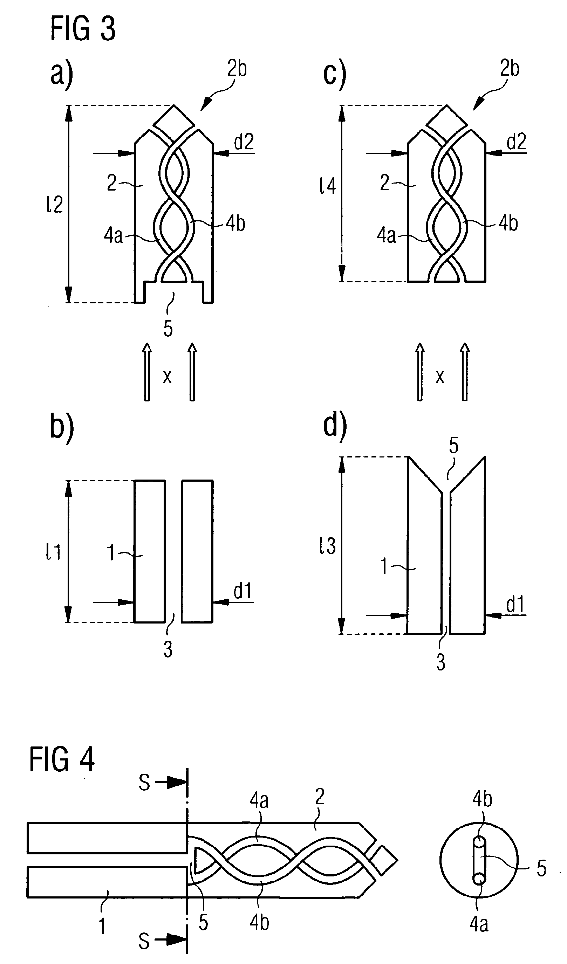

Die Figur 3 zeigt Skizzen zur Erläuterung eines Verfahrens zur Herstellung eines Dentalbohrers gemäß der Erfindung. Dabei wird anhand der Figuren 3a und 3b die Herstellung des in der Figur 1 gezeigten Dentalbohrers und anhand der Figuren 3c und 3c die Herstellung des in der Figur 2 gezeigten Dentalbohrers erläutert.

Zur Herstellung des in der Figur 1 gezeigten Dentalbohrers werden zunächst ein Schaft 1 und ein Arbeitsabschnitt 2 unabhängig voneinander hergestellt. Der Schaft 1 ist in der Figur 3b gezeigt. Der Arbeitsabschnitt 2 ist in der Figur 3a dargestellt.

Zur Herstellung des Schaftes 1 wird plastische Masse durch ein erstes Strangpresswerkzeug derart gepresst, dass vom ersten Strangpresswerkzeug ein aus plastischer Masse bestehender erster Körper mit mittig angeordnetem, durchgehenden ersten Kanal ausgegeben wird. Der vom ersten Strangpresswerkzeug ausgegebene erste Körper ist zylinderförmig ausgebildet und weist einen Durchmesser d1 auf. Der vom ersten Strangpresswerkzeug ausgegebene Körper wird auf eine vorgegebene Länge 11 abgelängt und dann getrocknet, so dass sich seine Konsistenz verfestigt.

Zur Herstellung des Arbeitsabschnitts 2 wird plastische Masse durch ein zweites Strangpresswerkzeug derart gepresst, dass vom zweiten Strangpresswerkzeug ein aus plastischer Masse bestehender zweiter Körper mit geradlinig verlaufenden weiteren Kanälen ausgegeben wird. Der vom zweiten Strangpresswerkzeug ausgegebene Körper ist ebenfalls zylinderförmig ausgebildet. Er weist einen Durchmesser d2 auf, der mit dem Durchmesser d1 des Schaftes übereinstimmt. Der vom zweiten Strangpresswerkzeug ausgegebene zweite Körper wird auf eine vorgegebene zweite Länge 12 abgelängt. Der abgelängte zweite Körper wird unter Abstützung über seine ganze Länge mittels einer Reibflächenanordnung zu einer gleichmäßigen Verdrillung einer Wälzbewegung unterworfen, deren Geschwindigkeit sich über die ganze Länge 12 stetig ändert. Dadurch werden aus den zunächst geradlinig verlaufenden weiteren Kanälen spiralförmig verlaufende weitere Kanäle 4a und 4b, wie es in der Figur 3a veranschaulicht ist. Der auf diese Weise erzeugte Körper wird getrocknet, so dass sich seine Konsistenz verfestigt. In den hinteren Bereich des getrockneten Körpers wird die Kammer 5 eingeschliffen, die beim gezeigten Ausführungsbeispiel rechteckig ausgebildet ist. In den vorderen Bereich des getrockneten Körpers wird der Schneidenbereich 2b ebenfalls mittels eines Schleifvorganges eingebracht.

Danach werden - wie es zwischen den Figuren 3a und 3b durch die Pfeile x veranschaulicht ist - die durch Trocknen verfestigten Körper in Axialrichtung aneinandergelegt und erhitzt. Dieses Erhitzen erfolgt derart, dass die aneinander anliegenden Oberflächen der erhitzten Körper aufschmelzen und dass die aneinander anliegenden Oberflächen derart miteinander versintert werden, dass nach ihrer Verbindung keine Naht- bzw. Fügestellen sichtbar sind. Die miteinander versinterten Körper werden anschließend noch getrocknet, so dass sich deren Konsistenz wieder verfestigt.

Durch das vorstehend beschriebene Versintern des Schaftes mit dem Arbeitsabschnitt wird ein einstückiges, versintertes Bauteil gebildet, welches die den Schaft 1 und den Arbeitsabschnitt 2 verbindende Kammer 5 vollständig umschließt. Folglich ist der Übergangsbereich zwischen dem Schaft und dem Arbeitsabschnitt frei von wie auch immer gearteten zusätzlichen Verbindungsmaterialien.

Zur Herstellung des in der Figur 2 gezeigten Dentalbohrers werden zunächst ein Schaft 1 und ein Arbeitsabschnitt 2 unabhängig voneinander hergestellt. Der Schaft 1 ist in der Figur 3d gezeigt. Der Arbeitsabschnitt 2 ist in der Figur 3c dargestellt.

Zur Herstellung des Schaftes 1 wird plastische Masse durch ein erstes Strangpresswerkzeug derart gepresst, dass vom ersten Strangpresswerkzeug ein aus plastischer Masse bestehender erster Körper mit mittig angeordnetem, durchgehenden ersten Kanal 3 ausgegeben wird. Der vom ersten Strangpresswerkzeug ausgegebene erste Körper ist zylinderförmig ausgebildet und weist einen Durchmesser d1 auf. Der vom ersten Strangpresswerkzeug ausgegebene Körper wird auf eine vorgegebene Länge 13 abgelängt und dann getrocknet, so dass sich seine Konsistenz verfestigt. In den vorderen Bereich des getrockneten Körpers wird die Kammer 5 eingeschliffen, die beim gezeigten Ausführungsbeispiel kegelförmig ausgebildet ist.

Zur Herstellung des Arbeitsabschnitts 2 wird plastische Masse durch ein zweites Strangpresswerkzeug derart gepresst, dass vom zweiten Strangpresswerkzeug ein aus plastischer Masse bestehender zweiter Körper mit geradlinig verlaufenden weiteren Kanälen ausgegeben wird. Der vom zweiten Strangpresswerkzeug ausgegebene Körper ist ebenfalls zylinderförmig ausgebildet. Er weist einen Durchmesser d2 auf, der mit dem Durchmesser d1 des Schaftes übereinstimmt. Der vom zweiten Strangpresswerkzeug ausgegebene zweite Körper wird auf eine vorgegebene zweite Länge 14 abgelängt. Der abgelängte zweite Körper wird unter Abstützung über seine ganze Länge mittels einer Reibflächenanordnung zu einer gleichmäßigen Verdrillung einer Wälzbewegung unterworfen, deren Geschwindigkeit sich über die ganze Länge 14 stetig ändert. Dadurch werden aus den zunächst geradlinig verlaufenden weiteren Kanälen spiralförmig verlaufende weitere Kanäle 4a und 4b, wie es in der Figur 3c veranschaulicht ist. Der auf diese Weise erzeugte Körper wird getrocknet, so dass sich seine Konsistenz verfestigt. In den vorderen Bereich des getrockneten Körpers wird der Schneidenbereich 2b mittels eines Schleifvorganges eingebracht.

Danach werden - wie es zwischen den Figuren 3d und 3c durch die Pfeile x veranschaulicht ist - die durch Trocknen verfestigten Körper in Axialrichtung aneinandergelegt und erhitzt. Dieses Erhitzen erfolgt derart, dass die aneinander anliegenden Oberflächen der erhitzten Körper aufschmelzen und dass die aneinander anliegenden Oberflächen derart miteinander versintert werden, dass nach ihrer Verbindung keine Naht- bzw. Fügestellen sichtbar sind. Die miteinander versinterten Körper werden anschließend noch getrocknet, so dass sich deren Konsistenz wieder verfestigt.

Durch das vorstehend beschriebene Versintern des Schaftes mit dem Arbeitsabschnitt wird ein einstückiges, versintertes Bauteil gebildet, welches die den Schaft 1 und den Arbeitsabschnitt 2 verbindende Kammer 5 vollständig umschließt. Folglich ist der Übergangsbereich zwischen dem Schaft und dem Arbeitsabschnitt frei von wie auch immer gearteten zusätzlichen Verbindungsmaterialien.

Die Figur 4 zeigt eine Längsschnittdarstellung eines Dentalbohrers gemäß einem dritten Ausführungsbeispiel für die Erfindung. Bei diesem dritten Ausführungsbeispiel ist die im Übergangsbereich vom Schaft 1 zum Arbeitsabschnitt 2 vorgesehene Kammer 5 schlitzförmig ausgebildet. Die Breite der Kammer 5 in Radialrichtung des Dentalbohrers ist an die radialen Außenabmessungen der spiralförmig verlaufenden Kanäle 4a und 4b angepasst, so dass die Kammer 5 in Radialrichtung nach außen nicht über die spiralförmig verlaufenden Kanäle hinausragt. Dies ist auch aus der Darstellung auf der rechten Seite von Figur 4 ersichtlich, wobei diese Darstellung eine Querschnittsdarstellung des Dentalbohrers längs der auf der linken Seite von Figur 4 gestrichelt gezeichneten Schnittlinie S zeigt.

Bei den vorstehend beschriebenen Ausführungsbeispielen weist der Schaft jeweils einen mittig angeordneten Zentralkanal auf. Gemäß einer abgeänderten Ausführungsform kann ein Dentalbohrer auch derart ausgebildet sein, dass die im Arbeitsbereich vorgesehenen spiralförmig verlaufenden Kanäle bis in den Schaft hineinreichen und auch den Schaft vollständig durchlaufen. In diesem Fall ist die Kühlmittelzufuhr im nicht in den Figuren dargestellten Griffstück des Dentalbohrers vorgesehen.

Dort kann dann beispielsweise ebenfalls eine Kammer vorgesehen sein, durch welche die von einer Kühlflüssigkeitsquelle gelieferte Kühlflüssigkeit in die spiralförmig verlaufenden Kanäle des Dentalbohrers weitergeleitet wird.

### Bezugszeichenliste

- 1: Schaft
- 2: Arbeitsabschnitt
- 2b: Schneidenbereich des Arbeitsabschnitts
- 3: erster Kanal
- 4a, 4b: weitere Kanäle
- 5: Kammer

- d1: Durchmesser des Schaftes
- d2: Durchmesser des Arbeitsabschnitts
- 11, 13: Länge des Schaftes
- 12, 14: Länge des Arbeitsabschnittes

## Patentansprüche

1. Verfahren zur Herstellung eines Dentalböhrers, der einen Schaft und einen Arbeitsabschnitt aufweist, wobei der Schaft einen mittig angeordneten, durchgehenden ersten Kanal und der Arbeitsabschnitt einen oder mehrere durchgehende, spiralförmig verlaufende weitere Kanäle aufweist, der erste Kanal und die weiteren Kanäle in eine gemeinsame, den Schaft und den Arbeitsabschnitt verbindende Kammer münden, mit folgenden Schritten:
- Herstellung des Schaftes, der einen mittig angeordneten, durchgehenden ersten Kanal aufweist,
- Herstellen des Arbeitsabschnitts, der einen oder mehrere durchgehende, spiralförmig verlaufende weitere Kanäle aufweist, und
- Verbinden des Schaftes mit dem Arbeitsabschnitt durch Versintern des Schaftes mit dem Arbeitsabschnitt zur Bildung eines einstückigen, versinterten Bauteiles, das die den Schaft und den Arbeitsabschnitt verbindende Kammer vollständig umschließt.

2. Verfahren nach Anspruch 1, **dadurch gekennzeichnet, dass** zur Herstellung des Schaftes plastische Masse durch ein erstes Strangpresswerkzeug gepresst wird, um einen aus plastischer Masse bestehenden ersten Körper mit mittig angeordnetem, durchgehenden ersten Kanal auszugeben, der das erste Strangpresswerkzeug verlassende Körper auf eine vorgegebene erste Länge abgelängt wird und der abgelängte Körper durch Trocknen verfestigt wird.

3. Verfahren nach Anspruch 1 oder 2, **dadurch g e - kennzeichnet,** dass zur Herstellung des Arbeitsabschnitts plastische Masse durch ein zweites Strangpresswerkzeug gepresst wird, um einen aus plastischer Masse bestehenden zweiten Körper mit geradlinig verlaufenden weiteren Kanälen auszugeben, der das zweite Strangpresswerkzeug verlassende zweite Körper auf eine vorgegebene zweite Länge abgelängt wird, der abgelängte zweite Körper unter Abstützung über seine ganze Länge mittels einer Reibflächenanordnung zu einer gleichmäßigen Verdrillung einer Wälzbewegung unterworfen wird, deren Geschwindigkeit sich über die ganze Länge linear und stetig ändert, und der verdrillte Körper durch Trocknen verfestigt wird.

4. Verfahren nach Anspruch 2 und 3, **dadurch gekennzeichnet, dass** die durch Trocknen verfestigten Körper in Axialrichtung aneinandergelegt werden, die aneinandergelegten Körper derart erhitzt werden, dass ihre aneinanderliegenden Oberflächen aufgeschmolzen werden, so dass sich die aneinander anliegenden Oberflächen miteinander versintern.

5. Dentalbohrer mit einem Schaft (1) und einem Arbeitsabschnitt (2), wobei der Schaft einen mittig angeordneten, durchgehenden ersten Kanal (3) aufweist, der Arbeitsabschnitt einen oder mehrere durchgehende, spiralförmig verlaufende weitere Kanäle (4a,4b) aufweist, zwischen dem Schaft und dem Arbeitsabschnitt eine Kammer (5) vorgesehen ist, der erste Kanal und die weiteren Kanäle in die Kammer münden und der Schaft und der Arbeitsabschnitt ein durch Versintern verbundenes einstückiges Bauteil bilden, das die den Schaft (1) und den Arbeitsabschnitt (2) verbindende Kammer (5) vollständig umschließt.

6. Dentalbohrer nach Anspruch 5, **dadurch gekennzeichnet, dass** der vom Schaft (1) abliegende Endbereich der spiralförmig verlaufenden weiteren Kanäle (4a,4b) jeweils im Schneidenbereich (2b) des Arbeitsabschnitts (2) mündet.

7. Dentalbohrer nach Anspruch 5 oder 6, **dadurch g e - kennzeichnet,** dass die Kammer (5) scheibenförmig oder schlitzförmig ausgebildet ist.

8. Dentalbohrer nach Anspruch 5 oder 6, **dadurch gekennzeichnet, dass** die Kammer (5) eckig oder zylindrisch ausgebildet ist.

9. Dentalbohrer nach Anspruch 5 oder 6, **dadurch gekennzeichnet, dass** die Kammer (5) kegelförmig ausgebildet ist.

## Claims

1. Method of producing a dental drill having a shank and a work section, wherein the shank has a centrally arranged, continuous first channel and the work section has one or more continuous, helically extending further channels, the first channel and the further channels opening into a common chamber connecting the shank and the work section, comprising the following steps:
- producing the shank having a centrally arranged, continuous first channel,
- producing the work section having one or more continuous, helically extending further channels and
- connecting the shank with the work section by sintering the shank to the work section to form a one-piece, sintered component which completely encloses the chamber connecting the shank and the work section.

2. Method according to claim 1, **characterised in that** for producing the shank a plastic material is extruded by a first extrusion tool in order to provide a first body, which consists of plastic material, with a centrally arranged, continuous first channel, the body leaving the first extrusion tool is cut to a predetermined first length and the cut-to-length body is hardened by drying.

3. Method according to claim 1 or 2, **characterised in that** for producing the work section a plastic material is extruded by a second extrusion tool in order to provide a second body, which consists of plastic material, with rectilinearly extending further channels, the second body leaving the second extrusion tool is cut to a predetermined second length, the cut-to-length second body is subjected to a uniform twisting of a rolling motion, the speed of which changes linearly and constantly over the entire length, by means of a friction surface arrangement while being supported over its entire length, and the twisted body is hardened by drying.

4. Method according to claim 2 and 3, **characterised in that** the bodies hardened by drying are placed against one another in axial direction and the bodies placed against one another are heated in such a manner that the mutually adjoining surfaces thereof are melted so that the mutually adjoining surfaces are sintered together.

5. Dental drill with a shank (1) and a work section (2), wherein the shank has a centrally arranged, continuous first channel (3), the work section has one or more continuous, helically extending further channels (4a, 4b), a chamber (5) is provided between the shank and work section, the first channel and the further channels open into the chamber and the shank and the work section form a one-piece component which is connected by sintering and which completely encloses the chamber (5) connecting the shank (1) and the work section (2).

6. Dental drill according to claim 5, **characterised in that** the end region, which is remote from the shank (1), of the helically extending further channels (4a, 4b) respectively communicates with the cut region (2b) of the work section (2).

7. Dental drill according to claim 5 or 6, **characterised in that** the chamber (5) is formed to be disc-shaped or slot-shaped.

8. Dental drill according to claim 5 or 6, **characterised in that** the chamber (5) is formed to be polygonal or cylindrical.

9. Dental drill according to claim 5 or 6, **characterised in that** the chamber (5) is formed to be conical.

## Revendications

1. Procédé de fabrication d'une fraise dentaire, qui comprend une tige et une portion de travail, la tige comprenant un premier canal traversant disposé au centre et la portion de travail comprenant un ou plusieurs canaux supplémentaires traversants, qui s'étendent en spirale, le premier canal et les canaux supplémentaires débouchant dans une chambre commune reliant la tige et la portion de travail, comprenant les étapes suivantes :
- fabrication de la tige, qui comprend un premier canal traversant disposé au centre,
- fabrication de la portion de travail qui comprend un ou plusieurs canaux supplémentaires qui s'étendant en spirale et
- raccordement de la tige à la portion de travail par frittage de la tige avec la portion de travail afin de former une pièce frittée monobloc qui entoure complètement la chambre reliant la tige et la portion de travail.

2. Procédé selon la revendication 1, **caractérisé en ce que**, pour la fabrication de la tige, une masse à l'état plastique est comprimée à travers un premier dispositif d'extrusion afin d'obtenir, à partir de cette masse plastique, un premier corps avec un premier canal traversant disposé au centre, le corps sortant du premier dispositif d'extrusion est coupé à une première longueur prédéterminée et le corps ainsi coupé est solidifié par séchage.

3. Procédé selon la revendication 1 ou 2, **caractérisé en ce que**, pour la fabrication de la portion de travail, une masse à l'état plastique est comprimée à travers un deuxième dispositif d'extrusion afin d'obtenir, à partir de cette masse plastique, un deuxième corps avec des canaux supplémentaires s'étendant en ligne droite, le corps sortant du deuxième dispositif d'extrusion est coupé à une deuxième longueur prédéterminée, le deuxième corps ainsi coupé étant soumis, grâce à un appui sur toute sa longueur, à l'aide d'un dispositif à surface de friction, à une torsion uniforme d'un mouvement de roulement, dont la vitesse varie de manière linéaire et constante sur toute la longueur et le corps torsadé est solidifié par séchage.

4. Procédé selon la revendication 2 et la revendication 3, **caractérisé en ce que** les corps solidifiés par séchage sont juxtaposés dans la direction axiale, les corps juxtaposés sont chauffés de façon à ce que leurs surfaces juxtaposées soient fondues entre elles, de façon à ce que les surfaces adjacentes se frittent entre elles.

5. Fraise dentaire avec une tige (1) et une portion de travail (2), la tige comprenant un premier canal (3) traversant disposé au centre, la portion de travail comprenant un ou plusieurs canaux supplémentaires (4a, 4b) traversants qui s'étendent en spirale, une chambre (5) étant prévue entre la tige et la portion de travail, le premier canal et les canaux supplémentaires débouchant dans la chambre et la tige et la portion de travail formant une pièce monobloc reliée par frittage, qui entoure complètement la chambre (5) reliant la tige (1) et la portion de travail (2).

6. Fraise dentaire selon la revendication 5, **caractérisée en ce que** la zone d'extrémité opposée à la tige (1) des canaux supplémentaires (4a, 4b) s'étendant en spirale débouche dans la zone de coupe (2b) de la portion de travail (2).

7. Fraise dentaire selon la revendication 5 ou 6, **caractérisée en ce que** la chambre (5) présente une forme de disque ou de fente.

8. Fraise dentaire selon la revendication 5 ou 6, **caractérisée en ce que** la chambre (5) présente une forme rectangulaire ou cylindrique.

9. Fraise dentaire selon la revendication 5 ou 6, **caractérisée en ce que** la chambre (5) présente une forme conique.
